# EUROPÄISCHE PATENTSCHRIFT

(11) **EP 0 807 649 B1**
(45) Veröffentlichungstag und Bekanntmachung des Hinweises auf die Patenterteilung: **23.04.2003**
(21) Anmeldenummer: 97107269.9
(22) Anmeldetag: 02.05.1997
(51) Int. Cl.: C08G 18/10, C08G 18/38, C08G 18/28, C09K 3/10

(54) **Alkoxysilan- und Hydantoingruppen aufweisende Polyurethanprepolymere, ein Verfahren zu ihrer Herstellung sowie ihre Verwendung zur Herstellung von Dichtstoffen**
Polyurethaneprepolymers containing alkoxysilane- and hydantoin groups, process for their preparation and their use for the preparation of sealants
Prépolymères de polyuréthane contenant des groupes alkoxysilane et hydantoine, procédé de leur préparation et leur utilisation pour la préparation de matières d'étanchéité

(30) Priorität: 15.05.1996 DE 19619538
(43) Veröffentlichungstag der Anmeldung: 19.11.1997
(73) Patentinhaber: BAYER AG, 51368 Leverkusen (DE)
(72) Erfinder: Schmalsteig, Lutz, Dr., 50676 Köln (DE); Rettig, Rainer, Dr., 51789 Lindlar (DE); Limbeck, Götz, 51491 Overath (DE)

(56) Entgegenhaltungen:
- EP-A- 0 596 360
- DE-A- 1 670 812

## Beschreibung

Die Erfindung betrifft Alkoxysilan- und Hydantoingruppen aufweisende Polyurethane, ein Verfahren zu ihrer Herstellung sowie ihre Verwendung als Bindemittel für Polyurethandichtstoffe.

Alkoxysilanfunktionelle Polyurethane, die über eine Silanpolykondensation vernetzen. sind lange bekannt (siehe z.B. "Adhesives Age" 4/1995, Seite 30 ff.). Derartige Alkoxysilan-terminierte, feuchtigkeitshärtende Einkomponenten-Polyurethane werden in zunehmendem Maße als weichelastische Beschichtungs-, Dichtungs- und Klebemassen im Bauwesen und in der Automobilindustrie verwendet. Bei diesen Anwendungen werden hohe Anforderungen an das Dehn-, Adhäsionsvermögen und an die Aushärtegeschwindigkeit gestellt. Insbesondere das von der Automobilindustrie geforderte Eigenschaftsniveau kann von den Systemen des Standes der Technik nicht in vollem Umfang erreicht werden.

Aus der EP-A 676 403 sind alkoxysilanfunktionelle Polyurethane bekannt, die durch Umsetzung von N-Arylaminosilanen mit NCO-Prepolymeren hergestellt werden. Diese Produkte erfüllen z.B. hinsichtlich ihres mechanischen Eigenschaftsniveaus die Anforderungen der Automobilindustrie. Problematisch bei den Produkten ist aber die mangelnde Thermostabilität der vernetzten Polymere. Die Ursache für dieses Verhalten ist die bekannte Thermolabilität von substituierten, insbesondere arylsubstituierten-Harnstoffen.

Aufgabe der vorliegenden Erfindung war es daher, Alkoxysilanfunktionelle Polyurethane bereitzustellen, die bei gutem Dehn- und Adhäsionsvermögen eine gute Thermostabilität aufweisen.

Gegenstand der Erfindung sind Alkoxysilan- und Hydantoingruppen aufweisende Polyurethanprepolymere der Formel (I) 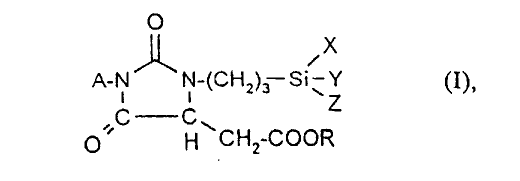 in welcher
- A: für einen Rest steht, der durch Entfernung der NCO-Gruppen aus einem Isocyanatprepolymeren mit einem NCO-Gehalt von 0,4 - 5 % und einer mittleren Funktionalität von 1,5 - 4 gebildet wird und
- R: für einen linearen oder verzweigten Alkylrest mit 1 - 8 Kohlenstoffatomen steht und
- X, Y, Z: unabhängig voneinander für Alkyl- oder Alkoxyreste mit 1 bis 4 Kohlenstoffatomen stehen, mit der Maßgabe, daß mindestens einer der Reste eine Alkoxygruppe darstellt.

Gegenstand der Erfindung ist auch ein Verfahren zur Herstellung Alkoxysilan- und Hydantoingruppen aufweisender Polyurethanprepolymere sowie deren Verwendung zur Herstellung von Dichtstoffen.

Die Herstellung der erfindungsgemäßen Alkoxysilan- und Hydantoingruppen aufweisender Polyurethanprepolymere erfolgt in einem 2-stufigen Herstellverfahren durch
a) vollständige Umsetzung der NCO-Gruppen von Isocyanatprepolymeren mit Alkoxysilan- und Aminogruppen aufweisenden Verbindungen
b) anschließende Cyclokondensationsreaktion (vgl. EP-A 596 360).

Die erfindungsgemäßen Produkte haben verbesserte mechanischen Eigenschaften und verminderte Oberflächenklebrigkeit.

Die erfindungsgemäß einzusetzenden Isocyanatprepolymere sind an sich bekannt. Sie werden durch Umsetzung von Diisocyanaten mit höhermolekularen Etherund/oder Ester- und/oder Carbonatgruppen aufweisenden Polyhydroxylverbindungen, gegebenenfalls unter Mitverwendung geringer Mengen niedermolekularer Polyhydroxylverbindungen hergestellt. Die erfindungsgemäß einsetzbaren NCO-Prepolymere weisen einen NCO-Gehalt von 0,4 bis 5 % auf, vorzugsweise 0,5 bis 2 %, und besitzen eine mittlere Funktionalität von 1,5 bis 4, vorzugsweise 1,7 bis 3, besonders bevorzugt 1,8 bis 2,2.

Einsetzbare Diisocyanate sind beliebige aliphatische, cycloaliphatische oder aromatische Diisocyanate. Bevorzugt einsetzbar sind aromatische oder cycloaliphatische Diisocyanate bzw. Gemische derartiger Diisocyanate. Unter "aromatischen" bzw. "cycloaliphatischen" Diisocyanaten sind dabei solche zu verstehen, die pro Molekül mindestens einen aromatischen bzw. cycloaliphatischen Ring aufweisen, wobei vorzugsweise mindestens eine der beiden Isocyanatgruppen direkt mit einem aromatischen bzw. cycloaliphatischen Ring gebunden ist.

Als Komponente A) bzw. Teil der Komponente A) geeignet sind beispielsweise aromatische oder cycloaliphatische Diisocyanate des Molekulargewichtsbereichs 174 bis 300 wie 2,4-Diisocyanatotoluol oder dessen technische Gemische mit vorzugsweise bis zu 35 Gew.-%, bezogen auf Gemisch, an 2,6-Diisocyanatotoluol, 4,4'-Diphenylmethandiisocyanat gegebenenfalls im Gemisch mit 2,4'-Diphenylmethandiisocyanat und 2,2'-Diphenylmethandiisocyanat, Bis-(4-isocyanatocyclohexyl)methan, 1-Isocyanato-3,3,5-trimethyl-5-isocyanatomethylcyclohexan (IPDI), 1-Isocyanato-1-methyl-4(3)-isocyanatomethylcyclohexan, 1,3-Diisocyanato-6-methyl-cyclohexan gegebenenfalls im Gemisch mit 1,3-Diisocyanato-2-methylcyclohexan. Es sind auch Mischungen der genannten Isocyanate einsetzbar.

Zur Herstellung der Isocyanatprepolymeren geeignete höhermolekulare Polyhydroxylverbindungen sind solche mit einem aus Hydroxylfunktionalität und Hydroxylgruppengehalt errechenbaren mittleren Molekulargewicht von 500 bis 10000, vorzugsweise 1800 bis 8000 mit 1,5 bis 4 Hydroxylgruppen pro Molekül.

Höhermolekulare Polyhydroxylverbindungen zur Herstellung der Prepolymeren sind beispielsweise Polyester-Polyole auf Basis von niedermolekularen einfachen Alkoholen und mehrbasischen Cabonsäuren wie Adipinsäure, Sebacinsäure, Phthalsäure, Isophthalsäure, Tetrahydrophthalsäure, Hexahydrophthalsäure, Maleinsäure, den Anhydriden derartiger Säuren oder beliebigen Gemischen derartiger Säuren bzw. Säureanhydride. Auch Hydroxylgruppen aufweisende Polylactone, insbesondere Poly-ε-caprolactone sind zur Herstellung der Prepolymeren geeignet.

Zur Herstellung der Isocyanatgruppen aufweisenden Prepolymeren ebenfalls gut geeignet sind Polyether-Polyole, wie sie in an sich bekannter Weise durch Alkoxylierung von geeigneten Startermolekülen zugänglich sind. Geeignete Startermoleküle sind beispielsweise die Polyole, Wasser, organische Polyamine mit mindestens zwei N-H-Bindungen oder beliebige Gemische davon.

Für die Alkoxylierungsreaktion geeignete Alkylenoxide sind insbesondere Ethylenoxid und/oder Propylenoxid, die in beliebiger Reihenfolge oder im Gemisch bei der Alkoxylierungsreaktion eingesetzt werden können.

Zur Herstellung der Prepolymeren geeignet sind Hydroxylgruppen aufweisende Polycarbonate, wie sie beispielsweise durch Umsetzung von einfachen Diolen mit Diarylcarbonaten, beispielsweise Diphenylcarbonat oder Phosgen hergestellt werden können. Beliebige Gemische der Polyhydroxylverbindungen können ebenfalls verwendet werden. Bevorzugt werden ausschließlich Polyetherpolyole eingesetzt.

Bei der Herstellung der NCO-Prepolymere können gegebenenfalls niedermolekulare 1- bis 6-wertige Alkohole des Molekulargewichts 32 bis 500 mitverwendet werden, z.B. ein- oder mehrwertige Alkanole wie Methanol, Ethanol, n-Hexanol, 2-Ethylhexanol, Ethylenglykol, Propylenglykol, Glycerin, Trimethylolpropan, Pentaerythrit und/oder Sorbit, Aminoalkohole wie beispielsweise Ethanolamin oder N,N-Dimethylethanolamin oder Diethylenglykol. Bei (Mit)Verwendung von Aminoalkoholen mit tert. Stickstoffatomen wie beispielsweise N,N-Dimethylethanolamin als Komponente b2) werden gleichzeitig als Katalysatoren wirkende Stickstoffatome in die Bindemittel eingebaut.

Die Herstellung der erfindungsgemäß einsetzbaren NCO-Prepolymere erfolgt durch Umsetzung der Diisocyanate mit der Polyolkomponente im Temperaturbereich von 40 bis 120°C, vorzugsweise 50 bis 100°C unter Einhaltung eines NCO/OH-Äquivalentverhältnisses von 1,3:1 bis 20:1, vorzugsweise 1,4:1 bis 10:1. Falls bei der Herstellung der Isocyanatprepolymeren eine Kettenverlängerung über Urethangruppen erwünscht ist, wählt man ein NCO/OH-Äquivalentverhältnis von 1,3:1 bis 2:1. Falls eine Kettenverlängerungsreaktion vermieden werden soll, verwendet man vorzugsweise einen Überschuß an Diisocyanat, entsprechend einem NCO/OH-Äquivalentverhaltnis von 4:1 bis 20:1, vorzugsweise 5:1 bis 10:1 und entfernt nach beendeter Reaktion das überschüssige Diisocyanat durch Dünnschichtdestillation.

Gegebenenfalls können bei der Herstellung der NCO-Prepolymeren die aus der Polyurethanchemie an sich bekannten aminischen oder metallorganischen Katalysatoren mitverwendet werden.

Die erfindungsgemäß einsetzbaren NCO-Prepolymere werden in der ersten Stufe des erfindungsgemäßen Verfahrens umgesetzt mit Alkoxysilan- und Aminogruppen aufweisenden Verbindungen der Formel (II) 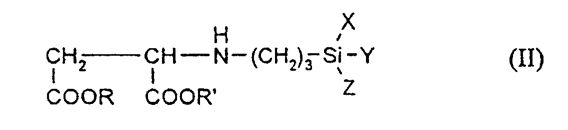 in welcher
- R und R': für gleiche oder verschiedene Alkylreste mit 1 bis 8 Kohlenstoffatomen, vorzugsweise 1 bis 4 Kohlenstoffatomen, ganz besonders bevorzugt 1 bis 2 Kohlenstoffatomen steht
und
- X, Y, Z: für gleiche oder verschiedene Alkyl- oder Alkoxyreste mit 1 bis 4 Kohlenstoffatomen stehen, mit der Maßgabe, daß mindestens einer der Reste, vorzugsweise alle 3 Reste für eine Alkoxygruppe steht.

Die Herstellung der erfindgungsgemäß einzusetzenden Alkoxysilan- und Aminogruppen aufweisenden Verbindungen erfolgt wie in der eigenen Patentanmeldung EP-A 596 360 beschrieben durch Umsetzung von Aminoalkylalkoxysilanen der Formel (III) 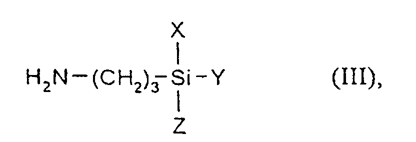 mit Malein- und/oder Fumarsäureestern der Formel (IV)

ROOC-CH=CH-COOR' (IV).

Beispiele für geeignete Aminoalkylalkoxysilane sind 3-Aminopropyltrimethoxysilan, 3-Aminopropyltriethoxysilan, 3-Aminopropyl-methyl-diethoxysilan; 3-Aminopropyltrimethoxysilan und 3-Aminopropyltriethoxysilan sind besonders bevorzugt.

Die Umsetzung der NCO-Prepolymeren mit den Alkoxysilan- und Aminogruppen aufweisenden Verbindungen im erfindungsgemäßen Verfahren erfolgt innerhalb eines Temperaturbereichs von 0 bis 60°C, vorzugsweise 20 - 50°C. Pro Mol eingesetzter NCO-Gruppen werden 0,95 bis 1,1 Mol Aminosilylverbindung eingesetzt, vorzugsweise wird pro Mol eingesetzter NCO-Gruppen 1 Mol Aminosilylverbindung eingesetzt.

Nach der Reaktion der Isocyanatgruppen mit den Amingruppen werden die entstandenen weitgehend isocyanatfreien Prepolymere im zweiten Schritt des erfindungsgemäßen Verfahrens in einer Kondensationsreaktion cyclisiert (z.B. US-A 3 549 599).

Zur Cyclisierung erhitzt man die substituierte Harnstoffgruppen aufweisenden Prepolymere auf Temperaturen von 50 - 160°C vorzugsweise 80 - 120°C, wobei der Monoalkohol R-OH bzw. R'-OH abgespalten wird. Gegebenenfalls kann die Cyclokondensationsreaktion durch die Zugabe von sauren oder basischen Katalysatoren beschleunigt werden. Der freiwerdende Monoalkohol kann bei Bedarf destillativ aus dem Reaktionsgemisch entfernt werden. Vorzugsweise verbleibt der Alkohol jedoch im Reaktionsgemisch.

Die erfindungsgemäßen Alkoxysilan- und Hydantoingruppen aufweisenden Polyurethanprepolymere sind wertvolle Bindemittel zur Herstellung von isocyanatfreien Polyurethandichtstoffen, die unter Einwirkung von Luftfeuchtigkeit über eine Silanpolykondensation vernetzen.

Zur Herstellung solcher Dichtstoffe werden die erfindungsgemäßen Alkoxysilanund Hydantoingruppen aufweisenden Prepolymere zusammen mit Weichmachern, Füllstoffen, Pigmenten, Additiven, Thixotropiermitteln, Katalysatoren und ggf. weiteren Hilfs- und Zusatzstoffen nach bekannten Verfahren der Dichtstoffherstellung formuliert.

Die vernetzten Polymere zeichnen sich aus durch hervorragende Elastomereigenschaften, geringe Oberflächenklebrigkeit und überragende Temperaturbeständigkeit.

### Beispiele

Die Messung der Viskositäten erfolgte nach DIN 53019 bei 23°C mittels Rotationsviskosimeter.

### Beispiel 1

2000 g eines Polyetherdiols der OH-Zahl 28, hergestellt durch Propoxylierung von Propylenglykol und anschließende Ethoxylierung des Propoxylierungsproduktes (PO/EO-Verhältnis = 80:20) werden mit 155 g Isophorondiisocyanat bei 100°C bis zum Erreichen des theoretischen NCO-Gehaltes von 0,78 % prepolymerisiert. Nach Abkühlen auf 40°C tropft man 140,4 g N-(3-Trimethoxysilylpropyl)asparaginsäurediethylester (hergestellt gemäß EP-A 596 360, Bsp. 5) zügig zu und rührt, bis im IR-Spektrum keine Isocyanatbande mehr zu sehen ist. Danach leitet man die Cyclokondensationsreaktion durch Erhitzen auf 100°C ein und destilliert entstehendes Ethanol unter vermindertem Druck ab (ca. 18 g). Das entstandene Reaktionsprodukt besitzt eine Viskosität von 54000 mPas (23°C).

Ein auf eine Glasplatte gegossener Film härtet unter Katalyse mit Dibutylzinndiacetat über Nacht zu einem klaren, hochelastischen Kunststoff einer Shore A-Härte von 20.

### Beispiel 2

1000 g eines Polyetherdiols der OH-Zahl 56, hergestellt durch Propoxylierung von Propylenglykol, werden mit 122 g 2,4-Diisocyanatotoluol bei 60°C bis zum Erreichen des theoretischen NCO-Gehaltes von 1,5 % prepolymerisiert. Nach Abkühlen auf 40°C tropft man 146 g N-(3-Triethoxysilylpropyl)asparaginsäurediethylester (hergestellt gemäß EP-A 596 360, Bsp. 2) zügig zu und rührt bis im IR-Spektrum keine Isocyanatbande mehr zu sehen ist. Danach cyclokondensiert man durch Erwärmung auf 100°C und destilliert insgesamt 12 g Methanol unter vermindertem Druck ab. Das entstandene Reaktionsprodukt weist eine Viskosität von 69000 mPas (23°C) auf.

Ein auf eine Glasplatte gegossener Film härtet unter Katalyse mit Dibutylzinndiacetat innerhalb von 24 Stunden zu einem elastischen Kunststoff einer Shore A-Härte von 28.

### Beispiel 3

2000 g des Polyetherdiols aus Beispiel 1 werden mit 77,7 g Isophorondiisocyanat und 91,7 g Dicyclohexylmethandiisocyanat bei 100°C bis zum Erreichen des theoretischen NCO-Gehaltes von 0,75 % prepolymerisiert. Nach Abkühlen auf 40°C tropft man 140,4 g N-(3-Trimethoxysilylpropyl)asparaginsäuredimethylester (hergestellt gemäß EP-A 596 360, Bsp. 4) zügig zu und rührt bis im IR-Spektrum keine Isocyanatbande mehr zu sehen ist. Nach Verdünnen mit 257 g eines handelsüblichen Weichmachers (®Mesamoll, Handelsprodukt der Bayer AG) leitet man durch Erwärmung auf 100°C die Cyclisierungsreaktion ein. Die Reaktion wird IR-spektroskopisch verfolgt, anhand des Verschwindens der Bande bei 1650 cm⁻¹ und ist nach 6 Stunden abgeschlossen. Das erhaltene Reaktionsprodukt besitzt eine Viskosität von 28000 mPas (23°C).

Ein auf eine Glasplatte aufgebrachter Film härtet unter Katalyse mit Dibutylzinndiacetat über Nacht zu einem klaren, hochelastischen Kunststoff einer Shore A-Härte von 23.

### Beispiel 4

Nicht erfindungsgemäßes Vergleichsbeispiel im Hinblick auf EP-A 596 360.

Man verfährt wie in Beispiel 1, verzichtet jedoch auf die Cyclokondensationsreaktion. Das entstandene Reaktionsprodukt besitzt eine Viskosität von 59000 mPas (23°C).

Ein auf eine Glasplatte aufgegossener Film härtet unter Katalyse mit Dibutylzinndiacetat über Nacht zu einem klaren Kunststoff einer Shore A-Härte von 17. Der Film zeigt eine verbleibende Oberflächenklebrigkeit, die Dehnbarkeit ist deutlich geringer im Vergleich zum Film aus Beispiel 1.

### Beispiel 5

Herstellung eines isocyanatfreien Polyurethandichtstoffs.

In einem handelsüblichen Planetenmischer werden die folgenden Komponenten zu einem Dichtstoff verarbeitet:

| | |
|---|---|
| 33 Gew.-TI. | Reaktionsprodukt aus Bsp. 1 |
| 37 Gew.-TI. | Kreide |
| 6 Gew.-TI. | Titandioxid |
| 16 Gew.-TI. | Weichmacher (®Unimoll BB, Handelsprodukt der Bayer AG) |
| 7 Gew.-TI. | hydriertes Ricinusöl |
| 1 Gew.-TI. | Dibutylzinndiacetat |

Der so hergestellte Dichtstoff zeigt eine ausgezeichnete Standfestigkeit, haftet auf nahezu allen Untergründen und härtet mit einer Hautbildungszeit von ca. 5 Stunden aus.

Die folgenden mechanischen Eigenschaften des ausgehärteten Dichtstoffs wurden bestimmt.

| | |
|---|---|
| Härte Shore A | 21 |
| Reißfestigkeit | 1,1 N/mm² |
| 100 % Modul | 0,3 N/mm² |
| Reißdehnung | 580 % |
| Weiterreißwiderstand | 2,5 N/mm |

## Patentansprüche

1. Alkoxysilan- und Hydantoingruppen aufweisende Polyurethanprepolymere der Formel (I) 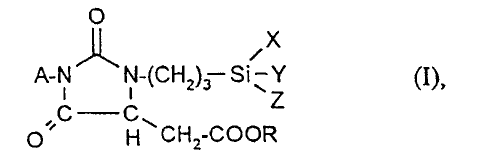 in welcher
A für einen Rest steht, der durch Entfernung der NCO-Gruppen aus einem Isocyanatprepolymeren mit einem NCO-Gehalt von 0,4 bis 5 % und einer mittleren Funktionalität von 1,5 bis 4 gebildet wird und
R für einen linearen oder verzweigten Alkylrest mit 1 bis 8 Kohlenstoffatomen steht und
X, Y, Z unabhängig voneinander für Alkyl- oder Alkoxyreste mit 1 bis 4 Kohlenstoffatomen stehen, mit der Maßgabe, daß mindestens einer der Reste eine Alkoxygruppe darstellt.

2. Alkoxysilan und Hydantoingruppen aufweisende Polyurethanprepolymere gemäß Anspruch 1, **dadurch gekennzeichnet, daß** A für einen Rest steht, der durch Entfernung der NCO-Gruppen aus einem Isocyanatprepolymeren auf Basis von Polyetherpolyolen gebildet wird.

3. Alkoxysilan und Hydantoingruppen aufweisende Polyurethanprepolymere gemäß Anspruch 1, **dadurch gekennzeichnet, daß** A für einen Rest steht, der durch Entfernung der NCO-Gruppen aus einem Isocyanatprepolymeren mit einer mittleren Funktionalität von 1,8 bis 2,2 gebildet wird.

4. Alkoxysilan und Hydantoingruppen aufweisende Polyurethanprepolymere gemäß Anspruch 1, **dadurch gekennzeichnet, daß** A für einen Rest steht, der durch Entfernung der NCO-Gruppen aus einem Isocyanatprepolymeren mit einem NCO-Gehalt von 0,5 bis 2 % gebildet wird.

5. Alkoxysilan und Hydantoingruppen aufweisende Polyurethanprepolymere gemäß Anspruch 1, **dadurch gekennzeichnet, daß** R für einen Alkylrest mit 1 oder 2 Kohlenstoffatomen steht.

6. Alkoxysilan und Hydantoingruppen aufweisende Polyurethanprepolymere gemäß Anspruch 1, **dadurch gekennzeichnet, daß** die Reste X, Y, Z unabhängig voneinander für Methoxy- oder Ethoxyreste stehen.

7. Verfahren zur Herstellung von Alkoxysilan- und Hydantoingruppen aufweisende Polyurethanprepolymeren gemäß Anspruchl durch Umsetzung von
i) Isocyanatprepolymeren mit einem NCO-Gehalt von 0,4 bis 5 % und einer mittleren Funktionalität von 1,5 bis 4 mit
ii) Aminoalkoxysilanen der allgemeinen Strukturformel (II) 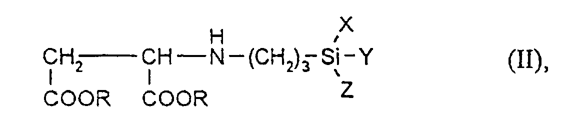
in welcher
R für einen linearen oder verzweigten Alkylrest mit 1 bis 8 Kohlenstoffatomen steht und
X, Y, Z unabhängig voneinander für Alkyl- oder Alkoxyreste stehen, mit der Maßgabe, daß mindestens einer der Reste für eine Alkoxygruppe darstellt
gefolgt von einer Cyclokondensationsreaktion bei 50 - 160°C.

8. Verwendung Alkoxysilan- und Hydantoingruppen aufweisender Polyurethanprepolymere gemäß Anspruch 1 zur Herstellung von isocyanatfreien Polyurethandichtstoffen.

## Claims

1. Polyurethane prepolymers having alkoxysilane and hydantoin groups of formula (I) 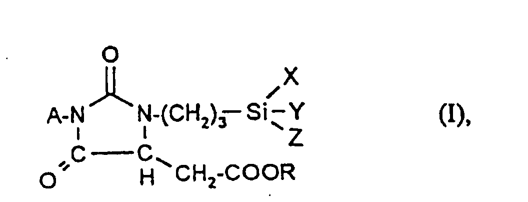 in which
A stands for a group which is formed by removal of the NCO groups from an isocyanate prepolymer with an NCO content of 0.4 to 5% and an average functionality of 1.5 to 4 and
R stands for a linear or branched alkyl group with 1 to 8 carbon atoms and
X,Y,Z independently of each other stand for alkyl or alkoxy groups with 1 to 4 carbon atoms, with the proviso that at least one of the groups is an alkoxy group.

2. Polyurethane prepolymers having alkoxysilane and hydantoin groups according to Claim 1, **characterized in that** A stands for a group which is formed by removal of the NCO groups from an isocyanate prepolymer based on polyether polyols.

3. Polyurethane prepolymers having alkoxysilane and hydantoin groups according to Claim 1, **characterized in that** A stands for a group which is formed by removal of the NCO groups from an isocyanate prepolymer with an average functionality of 1.8 to 2.2.

4. Polyurethane prepolymers having alkoxysilane and hydantoin groups according to Claim 1, **characterized in that** A stands for a group which is formed by removal of the NCO groups from an isocyanate prepolymer with an NCO content of 0.5 to 2%.

5. Polyurethane prepolymers having alkoxysilane and hydantoin groups according to Claim 1, **characterized in that** R stands for an alkyl group with 1 or 2 carbon atoms.

6. Polyurethane prepolymers having alkoxysilane and hydantoin groups according to Claim 1, **characterized in that** the groups X, Y, Z independently of each other stand for methoxy or ethoxy groups.

7. Process for the manufacture of polyurethane prepolymers having alkoxysilane and hydantoin groups according to Claim 1 by reaction of
i) isocyanate prepolymers with an NCO content of 0.4 to 5% and an average functionality of 1.5 to 4 with
ii) aminoalkoxysilanes of the general structural formula (II) 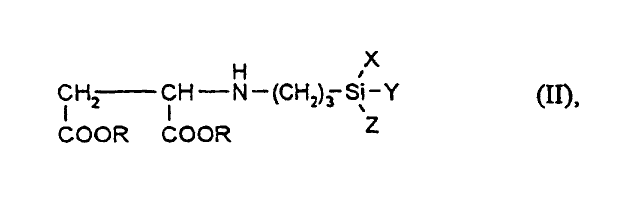 in which
R stands for a linear or branched alkyl group with 1 to 8 carbon atoms and
X, Y, Z independently of each other stand for alkyl or alkoxy groups, with the proviso that at least one of the groups stands for an alkoxy group
followed by a cyclocondensation reaction at 50-160°C.

8. Use of polyurethane prepolymers having alkoxysilane and hydantoin groups according to Claim 1 for the manufacture of isocyanate-free polyurethane sealants.

## Revendications

1. Prépolymères de polyuréthanne présentant des radicaux alcoxysilane et hydantoïne de la formule (I) : 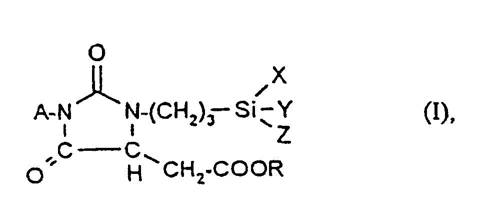 dans laquelle :
A représente un reste, qui par élimination de radicaux NCO, est formé d'un prépolymère isocyanate avec une teneur en NCO allant de 0,4 à 5% et une fonctionnalité moyenne allant de 1,5 à 4, et
R représente un reste alcoyle linéaire ou ramifié ayant 1 à 8 atomes de carbone, et
X, Y et Z représentent indépendamment l'un de l'autre, un reste alcoyle ou alcoxy, ayant 1 à 4 atomes de carbone, avec la condition qu'au moins l'un des restes est un radical alcoxy.

2. Prépolymères de polyuréthanne présentant des radicaux alcoxysilane et hydantoïne suivant la revendication 1, **caractérisés en ce que** A représente un reste qui est formé par élimination de radicaux NCO à partir d'un prépolymère isocyanate à base de polyétherpolyols.

3. Prépolymères de polyuréthanne présentant des radicaux alcoxysilane et hydantoïne suivant la revendication 1, **caractérisés en ce que** A représente un reste qui est formé par élimination des radicaux NCO à partir d'un prépolymère isocyanate avec une fonctionnalité moyenne allant de 1,8 à 2,2.

4. Prépolymères de polyuréthanne présentant des radicaux alcoxysilane et hydantoïne suivant la revendication 1, **caractérisés en ce que** A représente un reste qui est formé par élimination des radicaux NCO à partir d'un prépolymère isocyanate avec une teneur en NCO allant de 0,5 à 2%.

5. Prépolymères de polyuréthanne présentant des radicaux alcoxysilane et hydantoïne suivant la revendication 1, **caractérisés en ce que** R représente un reste alcoyle avec 1 ou 2 atomes de carbone.

6. Prépolymères de polyuréthanne présentant des radicaux alcoxysilane et hydantoïne suivant la revendication 1, **caractérisés en ce que** les restes X, Y, Z représentent indépendamment l'un de l'autre, le radical méthoxy ou éthoxy.

7. Procédé de préparation de prépolymères de polyuréthanne présentant des radicaux alcoxysilane et hydantoïne suivant la revendication 1, par réaction de :
i) des prépolymères isocyanate avec une teneur NCO allant de 0,4 à 5% et une fonctionnalité moyenne allant de 1,5 à 4, avec
ii) des aminoalcoxysilanes de la formule générale (II) : 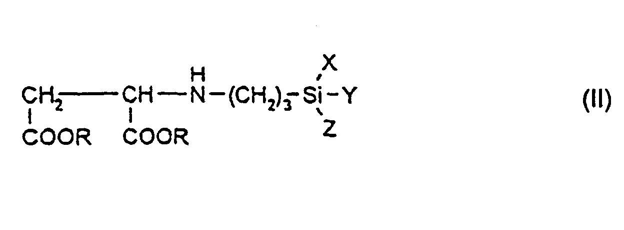
dans laquelle :
R représente un reste alcoyle linéaire ou ramifié ayant 1 à 8 atomes de carbone, et
X, Y et Z représentent indépendamment l'un de l'autre, un reste alcoyle ou alcoxy, avec la condition qu'au moins un des restes représente un radical alcoxy,
suivi d'une cyclocondensation de 50 à 160°C.

8. Utilisation des prépolymères de polyuréthanne présentant des radicaux alcoxysilane et hydantoïne suivant la revendication 1, pour la préparation de matières d'étanchéité en polyuréthanne, exemptes d'isocyanate.
